# FASCICULE DE BREVET EUROPEEN

(11) **EP 1 858 624 B1**
(45) Date de publication et mention de la délivrance du brevet: **14.05.2014**
(21) Numéro de dépôt: 06709538.0
(22) Date de dépôt: 27.02.2006
(51) Int. Cl.: B01D 53/04, B64D 13/00

(54) **VEHICULE AUTOMOTEUR COMPORTANT UN APPAREILLAGE EMBARQUE ALIMENTE EN AIR FILTRE**
FAHRZEUG MIT SELBSTANTRIEB UND BORDEIGENER AUSRÜSTUNG MIT GEFILTERTER LUFT
SELF-PROPELLED VEHICLE COMPRISING AN ONBOARD EQUIPMENT SUPPLIED WITH FILTERED AIR

(30) Priorité: 03.03.2005 FR 0550567
(43) Date de publication de la demande: 28.11.2007
(73) Titulaire: L'AIR LIQUIDE, Société Anonyme pour l'Etude et l'Exploitation des Procédés Georges Claude, 75007 Paris (FR)
(72) Inventeur: VANDROUX, Olivier, F-38100 Grenoble (FR); LESSI, Stéphane, Newark, Delaware 19711 (US); LEMAITRE, Isabel, F-38000 Grenoble (FR)
(74) Mandataire: De Cuenca, Emmanuel Jaime
(86) Numéro de dépôt international: PCT/FR2006/050171
(87) Numéro de publication internationale: WO 2006/092526

(56) Documents cités:
- FR-A- 2 855 145
- US-A1- 2003 145 726
- US-A1- 2004 000 353
- US-B1- 6 581 297

## Description

La présente invention concerne un véhicule automoteur comportant un appareillage embarqué alimenté en air filtré

L'invention concerne plus particulièrement un véhicule automoteur, notamment un aéronef, comportant un appareillage embarqué tel qu'un système d'inertage, des moyens de filtration de polluants vapeur disposés entre une entrée d'air connectée à une source d'air comprimé et une sortie d'air connectée à l'appareillage.

Dans le cadre notamment de la protection contre le feu des aéronefs (réservoir, compartiments ou autres types de baies) il est connu d'utiliser des systèmes d'inertage générant un gaz appauvri en oxygène remplaçant l'air ambiant pour empêcher une combustion.

Une solution connue pour générer ce gaz inerte consiste à alimenter en air sous pression des membranes composées de fibres polymères dont les caractéristiques assurent une séparation de l'azote et de l'oxygène contenu dans l'air. L'air utilisé peut être prélevé sur un circuit de l'avion ou généré directement à bord au moyen d'un compresseur.

Ces dispositifs connus sont cependant sensibles aux polluants susceptibles d'être présents dans l'air.

Le document US2004/000353A1 décrit un système de génération d'un gaz inerte (OBIGGS) pour aéronef comprenant, en amont d'un Module de Séparation d'Air (« ASM »), un dispositif de filtration comprenant, en série, une section de filtration « HEPA » coalescente et de polluants solide pour filtrer les particules et l'eau, une seconde section de filtration à charbon pour filtrer les hydrocarbures et une troisième section identique à la première section de filtration « HEPA » coalescente et de polluants solide pour filtrer les particules et l'eau.

Le document US2003/014526A1 décrit une zéolite pour la séparation sélective de gaz. La zéolite peut être classiquement employée dans deux adsorbeurs utilisés alternativement (PSA).

Le document US6581297 décrit un appareil de séchage comprenant, en amont de deux cartouches dessicatives disposées en parallèles, un pré-filtre et un filtre coalescent disposés en série.

Le document FR2855145 décrit un dispositif pour enrichir l'air avec de l'oxygène dans un avion comprenant deux tamis moléculaires disposés en parrallèle. En amont des deux tamis est prévu un séparateur d'eau et, en aval, un filtre à gaz.

Un but de l'invention est de proposer un véhicule automoteur, notamment aéronef comportant un dispositif de filtration d'un appareillage embarqué qui, tout en respectant des contraintes de poids et d'encombrement, permet de filtrer de façon adéquate les polluants présents dans l'air et donc d'augmenter considérablement la durée de vie de l'appareillage.

Ce but est atteint par le fait que le véhicule est conforme à la revendication 1.

Par ailleurs, l'invention peut comporter l'une ou plusieurs des caractéristiques suivantes :
- le véhicule comporte une ligne de connexion reliant l'aval des moyens de filtration de la première ligne à l'aval des moyens de filtration de la seconde ligne, la ligne de connexion comprenant des moyens de restriction tels qu'un orifice calibré,
- le véhicule comporte des moyens d'évacuation sélectifs reliés aux moyens de filtration,
- le véhicule comporte des moyens anti-retour, tels qu'au moins un clapet disposé entre les moyens de filtration de polluants vapeur et la sortie,
- les moyens d'évacuation sélectifs comportent une ligne de mise à l'atmosphère des moyens de filtration associée à des moyens de vannage.

D'autres caractéristiques et avantages de l'invention apparaîtront mieux à la lecture de la description ci-après, faite en référence aux figures, dans lesquelles :
- les figures 1 et 2 représentent des vues schématiques d'un premier mode de réalisation d'un système de filtration conforme à l'invention et selon respectivement deux séquences de fonctionnement distinctes,
- la figure 3 représente une vue schématique d'un autre mode de réalisation exclu de l'objet de l'invention.

Selon une caractéristique avantageuse de l'invention, les polluants sous forme vapeur sont stoppés à l'aide d'un système de filtration par adsorbtion utilisant, par exemple, un tamis moléculaire ou/et du charbon actif. Ce type de filtration par adsorbtion des polluants vapeur présentent les avantages suivants par rapport aux autres moyens de filtration vapeur (catalyseurs notamment) : bonne efficacité de filtration aux températures d'utilisation de la membrane et possibilité d'être régénéré dans les conditions d'utilisation normales de la membrane.

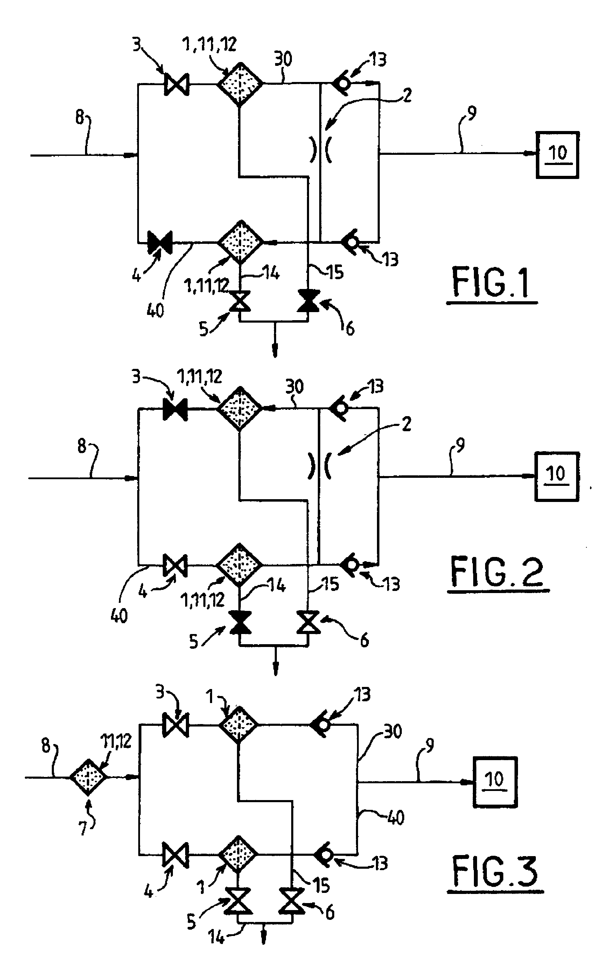

Le dispositif représenté aux figures 1 et 2 comprend une entrée 8 d'air destinée, par exemple, à être connectée à une source d'air comprimé (tel qu'un étage de compression d'une turbo-machine servant à la propulsion du véhicule. En aval, la ligne d'air comprend une portion dédoublée formant deux lignes d'air parallèle 30, 40. Chacune des deux lignes 30, 40 comporte, d'amont en aval, une vanne 3, 4, un filtre (ensemble désigné par les références : 1, 11, 12) et un clapet 13 anti-retour.

En aval du clapet 13 les deux lignes 30,40 se rejoignent en une unique ligne d'air filtré qui vient alimenter un appareillage 10, par exemple un système d'inertage basé sur les membranes de séparation d'air tel qu'un « OBIGGS » (pour « On Board Inert Gas Generating System »).

Les clapets anti-retour 13 disposés en aval des filtres 1, 11, 12 sont prévus pour éviter de dépressuriser les membranes de l'appareillage 10 situé en aval lors de la régénération des filtres 1, 11, 12.

Par ailleurs, une ligne 2 de connexion d'air relie l'aval du filtre 1, 11, 12 de la première ligne 30 à l'aval du filtre 1, 11, 12 de la seconde ligne 40. Plus précisément, la ligne 2 de connexion est connectée aux lignes 30, 40 parallèles en amont des clapets 13 et comporte un orifice calibré.

Enfin, chaque filtre 1, 11, 12 comporte une ligne d'évacuation 14, 15 respective pourvue d'une vanne 5, 6, pour permettre la régénération du filtre 1, 11, 12, par exemple par une mise à l'atmosphère.

Dans cet exemple de réalisation, le filtre de chaque ligne 30, 40 parallèles comporte des moyens 11 de filtration des particules, des moyens 12 de filtration à coalescence et des moyens 1 de filtration des polluants sous forme de vapeur par adsorbtion. Les moyens 1 de filtration des polluants sous forme de vapeur comportent, de préférence, des moyens de filtration du type à tamis moléculaire et/ou du type à charbon actif.

Par exemple, les moyens 1 de filtration vapeur comportent une couche de carbone activé disposée entre deux couches de media arrêtant respectivement les aérosols et les particules. Bien entendu, d'autres techniques de filtration peuvent également être envisagées comme par exemple les zéolites.

Le dispositif proposé permet, pendant toute la durée du vol d'un aéronef l'utilisant, de régénérer automatiquement l'un des deux filtres 1, 1, 12 parallèle pendant que l'autre filtre est utilisé pour arrêter les polluants, et ceci sans faire appel à des opérations de maintenance spécifiques.

Durant tout un vol, le dispositif peut fonctionner selon les phases suivantes :
- pendant une première séquence de durée déterminée (comprise par exemple entre 10 et 120 minutes), un premier filtre 1, 11, 12 (première ligne 30) est utilisé pour arrêter les polluants de l'air arrivant à l'appareillage 10, tandis que le second filtre (seconde ligne 40) est régénéré, puis,
- pendant une seconde séquence ultérieure de durée déterminée (par exemple identique à la première phase), le filtre 1, 11, 12 situé sur la première ligne 30 est régénéré, tandis que le filtre 1, 11, 12 situé sur la deuxième ligne 4 est utilisé pour arrêter les polluants de l'air qui arrive à l'appareillage 10.

De cette façon, la régénération de l'étage de filtration 1 à vapeurs de polluants est totale et la limitation de durée de vie du filtre est donc déterminée par le ou les media(s) arrêtant les particules et aérosols.

La figure 1 illustre plus précisément la première séquence décrite ci-dessus. L'air d'alimentation contenant les polluants, est envoyé dans l'appareillage 10 (« OBIGGS ») via l'ouverture de la vanne 3 située sur la première ligne 30. Dans le même temps, la vanne 4 située sur la seconde ligne 40 et la vanne 6 située sur la ligne d'évacuation du filtre 1, 11, 12 de la première ligne 3 sont fermées. Toujours dans même temps, la vanne 5 située sur la ligne 14 d'évacuation du filtre 1, 11, 12 de la seconde ligne 40 est ouverte. Le second filtre 1,11, 12 est par conséquent dépressurisé par mise à l'atmosphère.

L'air passe ainsi à travers le filtre 1, 11, 12 de la première ligne 3 dans lequel les polluants sont arrêtés. Le premier filtre 1, 11, 12 est alors sous pression, et l'air filtré est envoyé vers les membranes de l'appareil 10 d'inertage.

L'orifice calibré situé sur la ligne 2 reliant l'aval des deux filtres permet de prélever un peu d'air propre et chaud pour balayer le filtre à régénérer à contre-courant.

C'est ainsi qu'est régénérée la couche d'adsorbant du second filtre.

La figure 2 illustre plus en détail la seconde séquence décrite ci-dessus.

Durant cette seconde séquence, l'air d'alimentation contenant les polluants éventuels est envoyé dans l'appareil 10 via la seconde ligne 40 en ouvrant la vanne 4 correspondante. La vanne 6 située sur la ligne d'évacuation du filtre 1, 11, 12 de la première ligne 3 est ouverte. Par ailleurs, la vanne 3 de la première ligne 30 et la vanne 5 de située sur la ligne 14 d'évacuation du second filtre 1, 11, 12 sont fermées.

De cette façon, l'air passe à travers le second filtre 1, 11,12 (ligne 40), dans lequel les polluants sont arrêtés. Le filtre est alors sous pression, et l'air filtré est envoyé vers les membranes de l'appareil 10.

L'ouverture de la vanne 6 sur la ligne 15 d'évacuation du premier filtre provoque la dépressurisation de ce filtre par une mise à l'atmosphère.

L'orifice calibré situé sur la ligne 2 reliant l'aval des deux filtres parallèles permet de prélever un peu d'air propre et chaud pour balayer le filtre à régénérer à contre-courant.

C'est ainsi qu'est régénérée la couche d'adsorbant du filtre premier filtre.

La figure 3 illustre une variante de réalisation non revendiquée dans laquelle les moyens de filtration des particules 11 et les moyens 12 de filtration à coalescence sont séparés des moyens 1 de filtration des polluants sous forme vapeur.

Par soucis de concision, les éléments identiques à ceux décrits ci-dessus sont désignés par les mêmes références numériques et ne sont pas décrits en détail une seconde fois.

Par ailleurs, tout ou partie des vannes 3, 4, 5 et 6 peuvent être regroupées dans un seul boîtier (du type par exemple de celui décrit dans la demande de brevet déposée par la demanderesse n° EP 0499 505).

De même, un échangeur de chaleur, une ligne de bi-passe de l'échangeur et des moyens de vannage peuvent être prévu sur la ligne d'air pour adresser sélectivement l'air à l'échangeur et/ou à la ligne de bi-passe.

L'invention permet d'une part d'arrêter les polluants présents sous forme vapeur et, d'autre part d'atteindre des durées de vie de membranes séparatrices suffisantes pour une utilisation en aéronautique civile.

L'invention assure une bonne qualité de régénération des filtres qui contribue à une durée de vie du dispositif de filtration plus longue que dans les systèmes connus.

Le dispositif peut comporter en plus des moyens de filtration du type à catalyseurs qui modifient les molécules polluantes pour les transformer en molécules inoffensives pour la membrane.

Le système de filtration par adsorption peut être régénéré régulièrement ce qui permet de lui conserver son efficacité et de le dimensionner avec une masse et un encombrement compatibles avec le système de génération de gaz inerte.

L'invention peut également être utilisée pour de la filtration régénérable de l'air d'une cabine d'un véhicule et notamment d'un aéronef.

## Revendications

1. Véhicule automoteur, notamment aéronef, comportant un appareillage (10) embarqué constitué d'un système d'inertage à membranes de séparation de type « OBIGGS », des moyens (1) de filtration de polluants vapeur disposés entre une entrée (8) d'air connectée à une source d'air comprimé et une sortie (9) d'air connectée à l'appareillage (10), les moyens (1) de filtration de polluants vapeur comportant des moyens de filtration par adsorbtion du type tamis moléculaire et/ou charbon actif, des moyens (11) de filtration de particules, et. des moyens (12) de filtration à effet de coalescence, **caractérisé en ce qu'**il comporte, entre l'entrée (8) et la sortie (9) d'air, une portion subdivisée en deux lignes d'air parallèle (30, 40) comprenant chacune des moyens (1) de filtration de polluants vapeur, le dispositif comportant des moyens (3, 4) de régulation sélective de l'air entre les deux lignes (30, 40) parallèles pour permettre un fonctionnement et une régénération alternés des moyens (1) de filtration de polluants vapeur des deux lignes (30, 40), et **en ce que** les moyens (1) de filtration de polluants vapeur, les moyens (11) de filtration de particules et les moyens (12) de filtration à effet de coalescence sont intégrés dans un même filtre, les moyens (1) de filtration de polluants vapeur étant disposés entre des premiers moyens (11) de filtration de particule et des premiers moyens (12) de filtration à effet de coalescence situés en amont et des seconds moyens (11) de filtration de particule et des seconds moyens (12) de filtration à effet de coalescence situés en aval.

2. Véhicule selon la revendication 1, **caractérisé en ce qu'**il comporte une ligne (2) de connexion reliant l'aval des moyens (1) de filtration de la première ligne (30) à l'aval des moyens (1) de filtration de la seconde ligne (40), la ligne (2) de connexion comprenant des moyens de restriction tels qu'un orifice calibré.

3. Véhicule selon l'une quelconque des revendications 1 à 2, **caractérisé en ce qu'**il comporte des moyens (14, 15, 5, 6) d'évacuation sélectifs reliés aux moyens de filtration (1).

4. Véhicule selon l'une quelconque des revendications 1 à 3, **caractérisé en ce qu'**il comporte des moyens (13) anti-retour, tels qu'au moins un clapet disposé entre les moyens (1, 2) de filtration de polluants vapeur et la sortie (9).

## Patentansprüche

1. Selbstfahrendes Fahrzeug, insbesondere Luftfahrzeug, mit einer an Bord befindlichen Vorrichtung (10), die von einem Inertisierungssystem mit Trennmembranen des Typs "OBIGGS" gebildet ist, mit Mitteln (1) zur Filterung schädlicher Dämpfe, die zwischen einem Lufteinlass (8), der mit einer Druckluftquelle verbunden ist, und einem Luftauslass (9), der mit der Vorrichtung (10) verbunden ist, anordnet sind, wobei die Mittel (1) zur Filterung schädlicher Dämpfe Mittel zur Filterung durch Adsorption des Typs Molekularsieb und/oder Aktivkohle aufweisen, Mitteln (11) zur Filterung von Partikeln und Mitteln (12) zur Filterung mit Koaleszenzwirkung, **dadurch gekennzeichnet, dass** es zwischen dem Lufteinlass (8) und dem Luftauslass (9) einen Abschnitt aufweist, der in zwei parallele Luftleitungen (30, 40) unterteilt ist, die jeweils Mittel (1) zur Filterung schädlicher Dämpfe umfassen, wobei die Vorrichtung Mittel (3, 4) zur selektiven Regelung der Luft zwischen den zwei parallelen Leitungen (30, 40) aufweist, um abwechselnd den Betrieb und die Regeneration der Mittel (1) zur Filterung schädlicher Dämpfe der zwei Leitungen (30, 40) zu ermöglichen, und dass die Mittel (1) zur Filterung schädlicher Dämpfe, die Mittel (11) zur Filterung von Partikeln und die Mittel (12) zur Filterung mit Koaleszenzwirkung in ein und denselben Filter integriert sind, wobei die Mittel (1) zur Filterung schädlicher Dämpfe zwischen ersten Mitteln (11) zur Filterung von Partikeln und ersten Mitteln (12) zur Filterung mit Koaleszenzwirkung, die stromaufwärts befindlich sind, und zweiten Mitteln (11) zur Filterung von Partikeln und zweiten Mitteln (12) zur Filterung mit Koaleszenzwirkung, die stromabwärts befindlich sind, angeordnet sind.

2. Fahrzeug nach Anspruch 1, **dadurch gekennzeichnet, dass** es eine Verbindungsleitung (2) aufweist, die den stromabwärtigen Teil der Filtermittel (1) der ersten Leitung (30) mit dem stromabwärtigen Teil der Filtermittel (1) der zweiten Leitung (40) verbindet, wobei die Verbindungsleitung (2) Drosselungsmittel wie eine kalibrierte Öffnung umfasst.

3. Fahrzeug nach einem der Ansprüche 1 bis 2, **dadurch gekennzeichnet, dass** es selektive Ableitungsmittel (14, 15, 5, 6) aufweist, die mit den Filtermitteln (1) verbunden sind.

4. Fahrzeug nach einem der Ansprüche 1 bis 3, **dadurch gekennzeichnet, dass** es Rückschlagmittel (13) wie mindestens ein Klappenventil aufweist, das zwischen den Mitteln (1, 2) zur Filterung schädlicher Dämpfe und dem Auslass (9) angeordnet ist.

## Claims

1. Self-propelled vehicle, more particularly an aircraft, comprising on-board equipment (10) consisting of an inerting system based on separation membranes of the OBIGGS type, vapour pollutant filtration means (1) arranged between an air inlet (8) which is connected to a compressed air source and an air outlet (9) which is connected to the equipment (10), vapour pollutant filtration means (1) comprising adsorption filtration means of the molecular sieve and/or activated carbon type, particle filtration means (11) and coalescence filtration means (12), **characterised in that** it comprises, between the air inlet (8) and the air outlet (9), a portion subdivided into two parallel air lines (30, 40), each comprising vapour pollutant filtration means (1), the device comprising means (3, 4) for selectively regulating the air between the two parallel lines (30, 40) so as to allow the vapour pollutant filtration means (1) of the two air lines (30, 40) to be operated and regenerated alternately, and **in that** the vapour pollutant filtration means (1), the particle filtration means (11) and the coalescence filtration means (12) are integrated in the same filter, the vapour pollutant filtration means (1) being arranged between first particle filtration means (11) and first coalescence filtration means (12) which are positioned upstream, and second particle filtration means (11) and second coalescence filtration means (12) which are positioned downstream.

2. Vehicle according to claim 1, **characterised in that** it comprises a connecting line (2) connecting the downstream side of the filtration means (1) of the first line (30) to the downstream side of the filtration means (1) of the second line (40), the connecting line (2) comprising restriction means such as a calibrated orifice.

3. Vehicle according to either claim 1 or claim 2, **characterised in that** it comprises selective removal means (14, 15, 5, 6) connected to the filtration means (1).

4. Vehicle according to any of claims 1 to 3, **characterised in that** it comprises non-return means (13), such as at least one valve arranged between the vapour pollutant filtration means (1, 2) and the outlet (9).
